# FASCICULE DE BREVET EUROPEEN

(11) **EP 1 956 451 B1**
(45) Date de publication et mention de la délivrance du brevet: **02.05.2012**
(21) Numéro de dépôt: 08101036.5
(22) Date de dépôt: 29.01.2008
(51) Int. Cl.: G05B 19/048, G05D 1/00, G05B 9/02

(54) **Procédé et système pour l'autorisation sécurisée de l'activation d'une fonction critique sur un drône**
Verfahren und System zur gesicherten Autorisierung der Aktivierung einer kritischen Funktion an Bord einer Drohne
Method and system for securely authorising the activation of a critical function on a drone

(30) Priorité: 31.01.2007 FR 0752984
(43) Date de publication de la demande: 13.08.2008
(73) Titulaire: SAGEM DEFENSE SECURITE, 75015 Paris (FR)
(72) Inventeur: Massenet, Nicolas c/o Sagem Défense Sécurité, 75015 Paris (FR)
(74) Mandataire: Callon de Lamarck, Jean-Robert

(56) Documents cités:
- EP-A2- 1 091 273
- FR-A1- 2 843 668
- US-A1- 2006 168 453
- KHURSHID J ET AL: "Military robots - a glimpse from today and tomorrow", CONTROL, AUTOMATION, ROBOTICS AND VISION CONFERENCE, 2004. ICARCV 2004 8TH KUNMING, CHINA 6-9 DEC. 2004, PISCATAWAY, NJ, USA,IEEE, US, vol. 1, 6 December 2004 (2004-12-06), pages 771-777Vol.1, XP010815164, ISBN: 978-0-7803-8653-2

## Description

Le domaine de l'invention est celui des plateformes robotisées de type drone aérien ou terrestre.

L'invention concerne d'une manière générale l'insertion de fonctions sécurisées au sein de systèmes complexes. Elle concerne plus précisément l'autorisation de l'activation d'une fonction critique exigeant un niveau de sécurisation élevé, pour réalisation au sein d'un système complexe tel qu'un système de drone comprenant une ou des plateformes robotisées. A titre d'exemple non limitatif de fonction critique, on citera le déclenchement d'un tir de munitions à partir d'une telle plateforme.

Au sein de systèmes complexes, certaines fonctions particulières exigent des niveaux de sécurisation élevés, de part la nature des actions qu'elles délivrent, par exemple pour leur contribution directe à la sécurité du système. Ces fonctions sont ainsi communément dénommées fonctions critiques.

On précise que l'objectif ici visé est de prévenir l'activation inopinée de ces fonctions critiques. D'où la terminologie d'autorisation de fonction critique utilisée. La non-réalisation de la fonction n'est pas jugée critique ; en revanche, sa réalisation intempestive est jugée critique. Pour l'exemple d'application cité, la réalisation du tir de munition n'est pas en soit jugée critique au sens de la sécurité, mais son activation non-autorisée l'est.

Afin de garantir la sûreté de leur fonctionnement, et pour en faciliter la démonstration théorique, il est d'approche classique d'isoler ces fonctions ainsi que toute leur chaîne de commande et de contrôle. Ceci peut s'avérer fortement handicapant lorsque ces fonctions sont amenées à être insérées au sein de systèmes soit existants, soit trop complexes pour pouvoir être développés intégralement avec les niveaux de sûreté élevés visés. L'invention s'inscrit dans cette problématique, et vise notamment à permettre d'insérer de telles fonctions sans avoir pour autant à justifier de la robustesse de chaque maillon de la chaîne de contrôle de la fonction visée.

Revenant au cas des drones robotisés, on constate une tendance à vouloir d'équiper ces drones d'un système de missile. Mais ces drones ont été initialement développés sans avoir d'objectif de sécurité au niveau de la « sécurité missile ».

Si dans un système aéronautique classique, c'est le pilote qui est chargé de lever un verrou de sécurité permettant d'autoriser le déclenchement du tir de missile (autorisation ultime de sécurité), on comprend bien que dans le cadre d'un drone robotisé, la levée de ce verrou de sécurité doit être déportée au niveau du centre de contrôle du système (en l'occurrence une station au sol abritant les opérateurs du système).

Mais il faut alors garantir avec un niveau de sécurité particulièrement élevé que l'activation de la fonction critique « tir de missile » ne se déclenche pas inopinément. Par exemple le document FR 2 843 668 A1 (FRANCE TELECOM [FR]) 20 Février 2004 (2004-02-20) décrit un système pour l'activation d'une fonction critique.

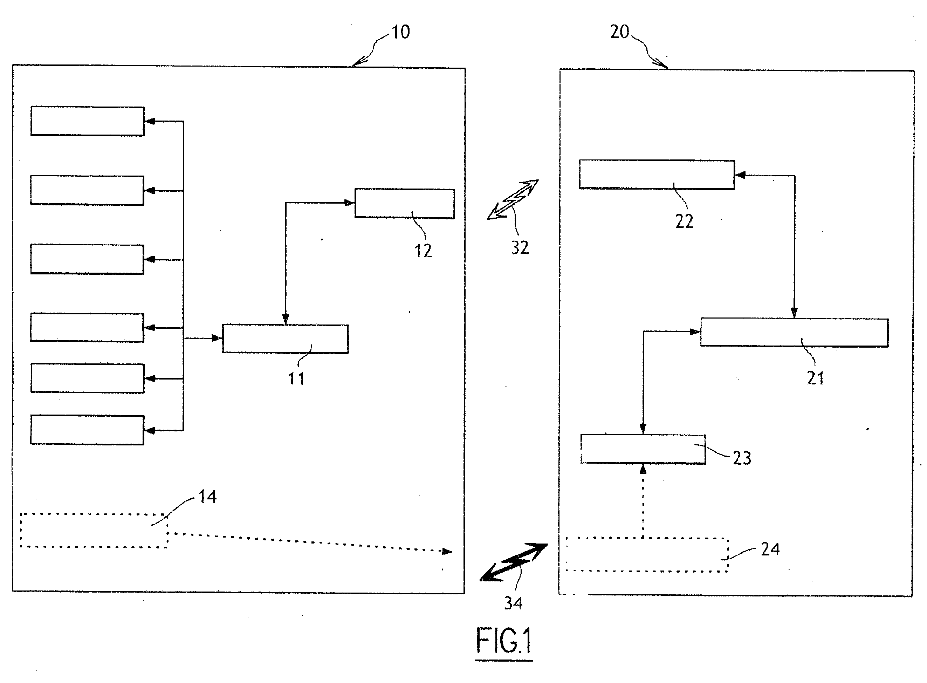

Une solution immédiate à ce problème d'intégration de la fonction critique de type tir de missile, imaginé par la demanderesse et dont elle n'a pas connaissance d'une publication officielle, est représentée sur la figure 1.

Sur cette figure 1, on a représenté une station sol 10 et un drone robotisé 20 déporté contrôlé à partir de la station sol 10 via une liaison radio 32.

La station sol 10 comprend de manière schématique un module central de contrôle et de commande, appelé module coeur 11, ainsi qu'un module de transmission 12 relié au module coeur 11.

Le drone 20 comprend un module central de contrôle et de commande, dit module coeur 21, un système missile 23 relié au module coeur 21, ainsi qu'un module de transmission 22 également relié au module coeur 21.

La liaison radio 32 assure la liaison fonctionnelle entre les modules coeur 11, 21 de la station 10 et du drone 20, par l'intermédiaire des modules de transmission 12, 22.

Sur cette figure 1, on représente en traits pleins ces éléments 11, 12, 32, 22, 21, 23 classiques en soi qui viennent d'être présentés.

Sur cette même figure 1, on a représenté en traits pointillés la chaîne d'éléments critiques, dite chaîne d'autorisation de tir, qui transmet l'autorisation de tir au système missile 23. Cette architecture ségréguée est une solution possible au problème d'intégration de l'activation du tir de missile.

La chaîne d'autorisation du tir comprend des modules sécurisés (c'est-à-dire réalisés avec un niveau de criticité suffisamment élevé pour la fonction recherchée) et reliés entre eux par un lien dédié. Ainsi la station 20 comprend un module d'autorisation du tir 14, le drone comprend un module d'autorisation du tir 24, ces modules 14, 24 étant reliés par une liaison dédiée illustrée par la flèche pleine portant la référence 34.

On comprend donc que dans cette architecture, on a choisi de ségréguer la chaîne d'autorisation de l'activation de la fonction critique, en la séparant cette chaîne du reste du système.

Si cette architecture s'avère performante pour démontrer de manière rigoureuse et à effort raisonnable la sûreté de fonctionnement global de la chaîne de tir, elle présente toutefois certains inconvénients.
Pour de multiples drones (contrôle d'une flotte de drones à partir de la station sol, et déploiement de multiples systèmes sur un théâtre d'opération), cette solution nécessite d'implémenter et de faire cohabiter de multiples liens supplémentaires, ce qui s'avère relativement inenvisageable dans un contexte opérationnel.

L'invention a pour objectif de proposer une autre solution à l'intégration d'une fonction critique, par exemple la commande du tir de missile, dans un système complexe, et en particulier une solution qui ne présente pas les inconvénients de la solution de la figure 1 utilisant un lien dédié additionnel.

Selon un premier aspect, l'invention concerne un système selon la revendication 1.

Selon un second aspect, l'invention concerne un procédé selon la revendication 10.

Selon d'autres aspects, l'invention concerne une station de contrôle au sol, ainsi qu'un drone robotisé pour un système selon le premier aspect.

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels, outre la figure 1 déjà commentée :
- la figure 2 représente un schéma d'un système d'activation d'une fonction critique selon un mode de réalisation possible du premier aspect de l'invention ;
- la figure 3 est un schéma d'un mode de réalisation possible d'un module d'activation selon l'invention ;
- la figure 4 est un schéma d'un mode de réalisation possible d'un module effecteur selon l'invention.

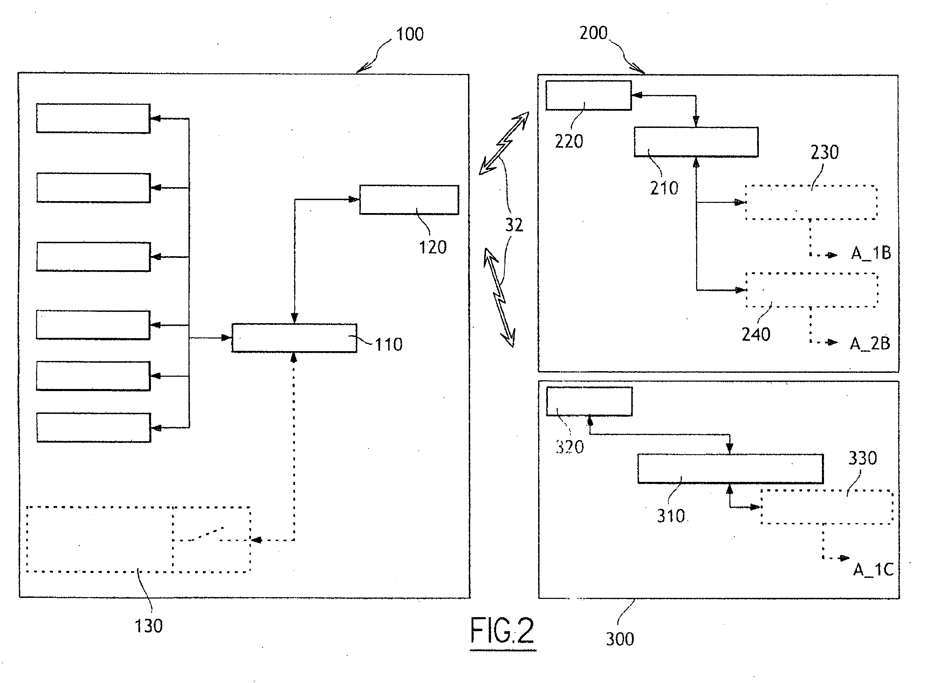

En référence à la figure 2, on a représenté un schéma d'un système d'activation d'une fonction critique, par exemple un tir de munitions, par une plateforme robotisée de type drone aérien ou terrestre, le système comprenant une station de contrôle au sol 100 et une flotte de plateformes constituée d'au moins une plateforme robotisée (ici deux plateformes 200, 300) déportée de la station 100 et en liaison avec la station.

La station au sol 100 comprend un module de contrôle et de commande de coeur 110, ainsi qu'un module de transmission 120 relié au module coeur 110.

Chacun des drones 200, 300 comprend un module de contrôle et de commande de coeur 210, 310, un système de missile (non représenté) relié au module coeur 210, 310, ainsi qu'un module de transmission 220, 320 également relié au module coeur 210, 310.

La liaison radio 32 assure la liaison entre le module coeur 110 de la station 100 et chacun des modules coeur 210, 310 des drones 200, 300, par l'intermédiaire des modules de transmission 120, 220,320.

Comme pour la figure 1, on a représenté en traits pointillés les éléments critiques des chaînes de tir. La station 100 comporte ainsi un (ou plusieurs) module(s) d'activation 130 de la fonction critique ; et chacune des drones 200, 300 comporte un (ou plusieurs) module(s) effecteur 230, 240, 330.

Le module d'activation 130 permet de générer différents ordres d'activation de fonction critique pour chacun des modules effecteurs 230, 240,330, et le système a pour mission de propager ces ordres auprès du module effecteur concerné.

Chaque module effecteur 230, 240, 330 reçoit son ordre d'activation, mais n'autorise la réalisation de la fonction attendue (jugée) de niveau critique que si il authentifie que l'ordre lui est bien destiné.

Dans l'exemple ici représenté, et sur ordre de la station au sol, le module effecteur 230 du drone 200 peut autoriser la réalisation de la fonction A_1 B, le module 240 du drone 200 peut autoriser la réalisation de la fonction A_2B, et le module 330 du drone 300 peut autoriser la réalisation de la fonction A_1C.

On aura compris que l'objectif recherché est de sécuriser les fonctions A_1B, A_2B, A_1C, dans la mesure où leur activation inopinée (c'est-à-dire non commandée intentionnellement) serait hautement dommageable.

La propagation des ordres d'autorisation par le système n'est pas critique car seule la réception du bon ordre, signé pour un effecteur spécifique, peut autoriser ce module effecteur à permettre la fonction visée.

La non propagation des ordres d'autorisation est également non critique, puisque comme rappelé en préambule, seule une activation inopinée des fonction est jugée indésirable.

Le module d'activation 130 et les modules effecteur 230, 240, 330 sont ainsi réalisés avec le niveau de criticité recherché (donc relativement élevé) pour le niveau de sécurité de la fonction recherché. Le reste du système peut avoir un niveau de criticité bien moindre, sans incidence sur la sécurité globale de la fonction (d'un point de vue de son activation inopinée).

Le module d'activation 130 comprend des moyens pour générer un message d'activation de la fonction critique signé, et donc spécifique, pour chacun des modules effecteurs possibles. Il s'agit par exemple de générer un message d'activation de la fonction A_1B, ce message étant alors explicitement signé pour le module effecteur 230 de la plateforme 200.

Comme indiqué, le message d'activation est signé pour un module effecteur désigné. Il s'agit effectivement ici d'envoyer un ordre sécurisé par signature, afin de garantir que seul le module d'activation 130 est en mesure de générer des ordres valides pour l'effecteur visé, et que seul le module effecteur destinataire (le module désigné 230 dans l'exemple ici présenté) est en mesure de confirmer la validité de ces ordres, en authentifiant ces ordres comme lui étant bien destinés, et donc de pouvoir ensuite activer la fonction A_1B.

Afin de réaliser la signature du message d'activation, un algorithme cryptographique de signature est par exemple utilisé qui permet de garantir mathématiquement avec un haut niveau de sécurité l'intégrité de l'information contenue dans le message, ainsi que l'authentification de cette information.

Plus précisément, un système à clé de signature et clé d'authentification est utilisé par respectivement le module d'activation et chaque module effecteur pour assurer respectivement la signature et l'authentification d'un message d'activation, un couple clé de signature / clé d'authentification différent étant associé à chaque couple module activation / module effecteur.

Ce couple clé de signature / clé d'authentification peut être défini pour un usage permanent (par exemple sur l'ensemble d'une mission), on encore pour un usage limité dans le temps, ou encore pour un usage limité à un certain nombre d'utilisations (par exemple une utilisation unique).

Selon un mode de réalisation préférentiel, la solution retenue utilise un système de clés asymétriques. Une clé de signature du type clé privée est utilisée par le module d'activation 130 pour signer le message émis par la station au sol 100 pour un module effecteur désigné. Une clé de signature du type clé publique, différente de la clé privée, est utilisée dans chaque module effecteur 230, 240, 330 pour valider l'authenticité du message en provenance du module d'activation.

La clé privée utilisée par le module d'activation 130 est propre à chaque module effecteur à désigner, et la clé publique utilisée par un module effecteur peut être propre à ce module effecteur (en d'autres termes, chaque module effecteur dispose alors de sa propre clé publique) ou encore être identique pour tout ou partie des modules effecteurs.

Ainsi, on dispose pour chaque module effecteur d'un couple différent de clé publique / clé privée. Cela permet à chaque module effecteur d'être rigoureusement différencié.

Par ailleurs, la compromission de la clé publique présente dans un module effecteur n'a pas d'incidence sur la sécurité du système puisqu'elle ne permet pas de générer des signatures, mais uniquement de les vérifier. En particulier, on comprend qu'en récupérant un drone, une personne malveillante ne pourrait au plus que disposer de la ou des clés publiques du ou des modules effecteurs de ce drone. Mais cette personne ne pourrait disposer de la clé privée permettant de générer les messages d'activation.

Ce mode de réalisation préférentiel s'avère avantageux dans la mesure où il permet de différencier rigoureusement différents systèmes (donc avec plusieurs modules d'activation, et d'autres modules effecteurs) sur un même théâtre d'opération. Ceci est partiellement intéressant car des systèmes multiples en présence sont toujours face au risque, par maladresse opérateur ou incident technique, de se brouiller ou de se perturber mutuellement.

On retiendra que dans le cadre de l'invention, la taille des clefs de signatures utilisées est dimensionnée pour s'affranchir des risques de pannes/distorsions de message inopinées de la partie intermédiaire, non sécurisée du système. L'utilisation d'algorithmes cryptographiques en accord avec l'état de l'art permet en particulier de garantir que la génération d'une signature de manière aléatoire ne peut être valide qu'avec une probabilité largement négligeable.

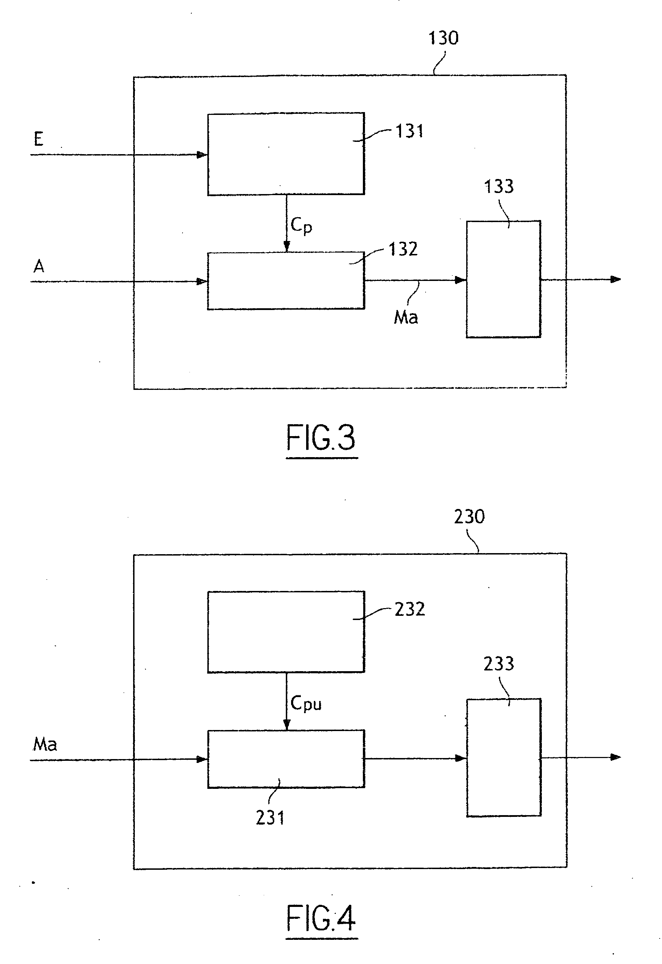

On décrit ci-après de manière plus précise l'activation de la fonction critique, en particulier en référence aux figures 3 et 4 représentant un mode de réalisation possible respectivement d'un module d'activation 130 et d'un module effecteur 230.

Le module d'activation 130 comporte une mémoire 131 dans laquelle est stockée la clé privée associée à chaque module effecteur 230, 240, 330.

Sur un ordre E identifiant le module effecteur devant réaliser la fonction critique (module effecteur désigné par l'activation), la mémoire 131 présente en sortie la clé privée C_{P} associée au module effecteur désigné.

Le module d'activation 130 comporte également un module de signature 132 recevant en entrée un ordre d'activation A (ou de désactivation) de la fonction - par exemple un ordre manuel ou sécurisé - pour un module effecteur désigné, et la clé privée C_{P} associée à ce module effecteur. Le module de signature 132 génère alors un message Ma d'activation (ou de désactivation) de la fonction signé pour l'effecteur désigné.

Ce message d'activation Ma signé est ensuite acheminé par le système jusqu'au module effecteur désigné (par exemple jusqu'au module 230, en transitant par un module 133 d'interface de dialogue avec la station, le module coeur 110 et le module de transmission 120 de la station 100, la liaison radio 32, et le module de transmission 220 et le module coeur 210 du drone 200).

Comme représenté sur la figure 4, le module effecteur 230 comporte des moyens de vérification de signature 231 de message signé prenant en entrée le message d'activation signé Ma et la clé publique Cₚᵤ dont il dispose dans une mémoire 232, ces moyens de vérification de signature 231 permettant de vérifier si le message lui est bien destinée et si il l'autorise à activer la fonction qu'il assume (fonction A_1B dans le cas du module effecteur 230).

En d'autres termes, les moyens de vérification de signature 231 permettent d'authentifier un message reçu par le module effecteur 230 en vérifiant ainsi s'il s'agit d'un message intègre, effectivement signé pour ce module effecteur.

Le module effecteur 230 comprend également un module 233 d'interface de dialogue avec le système missile apte à lui transmettre le résultat de la vérification de signature, à savoir une information lui autorisant ou non à réaliser la fonction critique (déclenchement d'un tir de missile).

Tous les modules effecteurs sont élaborés sur le même modèle, de sorte que tout autre module effecteur (dans l'exemple, les modules 240, 330) que le module effecteur désigné (module 230) recevant le même message, mais associé à un couple clé privée / clé publique différent, conclura à une signature fausse, et n'enclenchera pas la fonction qu'il commande (les fonctions A_2B et A_1C ne pourront donc pas être réalisées).

Par ailleurs, toute erreur de transmission, ou altération des messages d'activation via la chaîne d'acheminement du message, ou encore la génération de message quelconque du fait d'un dysfonctionnement du système, engendrera un message qui sera non reconnu par le module effecteur, car non signé correctement.

On aura compris que pour adresser sûrement plusieurs modules effecteurs, il suffit de différentier les clefs de ces modules, en prévoyant une clé propre à chaque module (chargées en dur dans chaque module, ou par préparation manuelle avant une mission, selon la polyvalence recherchée).

On relèvera que l'invention n'est pas limitée à la mise en oeuvre d'un système de cryptographie asymétrique, et qu'il est également possible, notamment si l'on juge que l'aspect compromission n'est pas critique, d'utiliser un système de cryptographie symétrique pour lequel la même clé est utilisée par le module d'activation et le module effecteur désigné (cette clé étant bien entendu valable uniquement pour un couple module activation/module effecteur particulier).

On a vu précédemment que pour garantir qu'un module effecteur ne puisse agir que sur le bon ordre, l'ordre émis par le module d'activation est signé avec la méthode de signature décrite ci-dessus.

On décrit ci-après différentes variantes de réalisation.
■ Pour garantir à tout moment de n'activer la fonction que sur maintien de l'ordre, le message d'activation est transmis de manière permanente au module effecteur désigné, et toute interruption de la transmission du message d'activation désactive la fonction critique au bout d'un délai déterminé (mode de repli par défaut, ou « fail -safe » selon la terminologie anglo-saxonne).
■ La sécurisation du retour d'information de l'état de la fonction (état du module effecteur) peut de même être réalisée par la méthode inverse, avec des clés différentes (une clé de signature, par exemple un clé privée, dans chaque module effecteur), signature de l'information (envoi d'un message signé relatif à l'état du module effecteur), transmission du message signé par le module effecteur vers le module d'activation, et authentification dudit message par le module d'activation de la station. Ainsi, on disposera au sol d'une information consolidée sur l'état du module effecteur. Son état actif (ou inactif) peut ainsi être transmis avec une très bonne sécurité, ce qui est très important également pour le suivi du système depuis la station sol.
■ On mentionnera également que dans le cadre de l'invention, le niveau de sécurité garanti peut être très facilement adapté en fonction de l'environnement rencontré, par exemple en restreignant l'usage des clés à un usage unique, limité dans le temps, etc.

L'invention décrite ci-dessus permet donc d'adresser de manière sécurisée et indépendantes plusieurs sous-ensembles au sein d'un système complexe (par exemple un drone aérien au sein d'une flottille de drones aériens, une munition au sein d'un ensemble de munitions sur un ou plusieurs drones).

L'invention permet également à plusieurs systèmes du même type de cohabiter sur une même zone, sans risques de perturbation sécuritaire (même en cas de fréquence commune), en particularisant les signatures de chaque système et chaque sous-système.

L'invention offre en outre une sécurisation élevée au leurrage adverse, puisque la simple connaissance de la clé publique ne permet pas l'activation des fonctions, et que le couple de clefs peut être défini pour un usage limité, voire unique (en multipliant alors les clés pour chaque munition, ou chaque drone, ou chaque demande d'action).

Par ailleurs, on aura compris que l'invention n'est pas limitée à l'autorisation d'activation du déclenchement d'un tir de missile, mais a vocation à s'étendre de manière plus large à l'autorisation de l'activation de toutes fonctions jugées critiques ou sécuritaires. A titre d'exemples non limitatifs, on citera:
- la délivrance ou l'autorisation de délivrance d'une munition au sein d'un système ;
- l'activation d'équipements particuliers aux effets potentiellement dangereux pour le système ou son environnement (équipements laser, émissions radars, allumages de dispositifs pyrotechniques...) ;
- l'activation/neutralisation de chaîne de sécurité pour la mise en mode sécuritaire d'un système : interruption du vol d'un aéronef ou missile, par activation de chaîne de récupération, d'arrêt de la propulsion, de neutralisation / destruction en vol, inhibition de la chaîne de récupération nominale, inhibition de dispositif de sécurité comme le transpondeur ;
- l'activation de fonctions essentielles à la sécurité de fonctionnement : redéploiement de voilure, commande de volet, sortie d'aérofreins.

Bien entendu, l'invention s'étend également aux différents éléments du système pris séparément, et notamment à une station au sol dotée d'un module d'activation, et à un drone doté d'un module effecteur.

## Revendications

1. Système permettant de lever un verrou de sécurité protégeant l'activation non-autorisée d'une fonction critique (A_1B, A_2B, A_1C) par un drone robotisé (200, 300) de type aérien ou terrestre apte a communiquer avec une station au sol (100) par l'intermédiaire d'une liaison radio (32),
le système étant **caractérisé en ce que** la station (100) comporte un module d'activation (130), et le drone comporte au moins un module effecteur (230, 240, 330),
le module d'activation (130) comprenant des moyens de génération (132) d'un message d'activation (Ma) de la fonction critique spécifiquement signé pour un module effecteur désigné;
et chaque module effecteur (230, 240, 330) comprenant des moyens d'authentification (231) de messages d'activation signés en provenance de la station via la liaison radio (32), lesdits moyens d'authentification étant aptes à vérifier si un message reçu est un message intègre effectivement signé pour ledit module effecteur, et à autoriser le cas échéant l'activation de la fonction critique.

2. Système selon la revendication précédente, **caractérisé en ce qu'**un système à clé de signature et clé d'authentification est utilisé par le module, d'activation et chaque module effecteur pour assurer respectivement la signature et l'authentification d'un message d'activation, un couple clé de signature / clé d'authentification différent étant associé à chaque couple module d'activation/module effecteur.

3. Système selon la revendication précédente, **caractérisé en ce que** le couple clé de signature / clé d'authentification est défini pour un usage limité dans le temps, ou pour un usage limité à un certain nombre d'utilisations.

4. Système selon l'une des deux revendications précédentes, **caractérisé en ce que** le système de clés est un système de clés asymétriques dans lequel le module d'activation utilise une clé de signature privée choisie en fonction du module effecteur désigné, et chaque module effecteur utilise une clé d'authentification publique.

5. Système selon la revendication précédente, **caractérisé en ce que** chaque module effecteur utilise une clé d'authentification publique qui lui est propre.

6. Système selon l'une des quatre revendications précédentes, **caractérisé en ce que** le module d'activation (130) comporte une mémoire (131) stockant chacune des clés de signature destinées à être utilisées par les moyens de génération (132) pour signer un message d'activation de la fonction critique pour un module effecteur désigné.

7. Système selon l'une des cinq revendications précédentes, **caractérisé en ce que** chaque module effecteur (230) comporte une mémoire (232) stockant la clé d'authentification destinée à être utilisée par les moyens d'authentification (231) pour vérifier si un message reçu est un message intègre.

8. Station au sol (100) permettant de lever un verrou de sécurité protégeant l'activation non autorisée d'une fonction critique (A_1B, A_2B, A_1C) par un drone robotisé (200, 300) de type aérien ou terrestre appartenant à une flotte de drones robotisés,
la station au sol comprenant un module de transmission (120) apte à assurer une liaison radio avec chacun des drones de la flotte,
la station au sol étant **caractérisée en ce qu'**elle comporte un module d'activation (130) comprenant des moyens de génération (132) d'un message d'activation (Ma) d'une fonction critique signé pour un drone désigné de sorte que seul le drone désigné puisse autoriser l'activation de la fonction critique, et **en ce que** le module de transmission est configuré pour assurer la transmission dudit message d'activation (Ma) audit module effecteur désigné.

9. Drone robotisé (200, 300) destiné a appartenir à une flotte de drones robotisés,
comprenant un module de transmission (220) apte à assurer une liaison radio avec une station au sol (100) et au moins un module effecteur (230, 240, 330) apte à réaliser une fonction critique sur ordre de la station au sol, l'activation non autorisée de la fonction critique étant protégée par un verrou de sécurité,
**caractérisé en ce qu'**il comporte des moyens d'authentification (231) de messages reçus depuis la station au sol configurés pour vérifier si un message reçu est un message intègre signé pour un module effecteur désigné du drone, et pour lever le cas échéant le verrou de sécurité protégeant l'activation de la fonction critique par ledit module effecteur désigné.

10. Procédé pour lever un verrou de sécurité protégeant l'activation non-autorisée d'une fonction critique (A_18, A_2B, A_1C) par un drone robotisé (200, 300) de type aérien ou terrestre apte à communiquer avec une station au sol (100) par l'intermédiaire d'une liaison radio (32), la station au sol (100) comprenant un module d'activation (130) et le drone (200, 300) comprenant au moins un module effecteur (230, 240, 330), **caractérisé en ce qu'**il comporte les étapes de :
- génération par le module d'activation (130) de la station au sol d'un message d'activation (Ma) de la fonction critique spécifiquement signé pour un module effecteur désigné;
- transmission du message par la liaison radio (32) depuis le module d'activation (130) vers le module effecteur désigné ;
- authentification par le module effecteur désigné du message d'activation signé, pour vérifier si le message reçu est un message intègre effectivement signé pour ledit module, est
- autorisation, le cas échéant, par le module effecteur désigné de l'activation de la fonction critique.

11. Procédé selon la revendication précédente, **caractérisé en ce qu'**il met en oeuvre un système à clé de signature et clé d'authentification pour assurer respectivement la signature et l'authentification d'un message d'activation, avec un couple clé de signature / clé d'authentification différent pour chaque couplé module d'activation/module effecteur.

12. Procédé selon la revendication précédente, **caractérisé en ce que** le système de clés est un système de clés asymétriques, le module d'activation utilisant une clé de signature privée choisie en fonction du module effecteur désigné, et chaque module effecteur utilisant une clé d'authentification publique.

13. Procédé selon l'une des revendications 10 à 12, **caractérisé en ce qu'**il met en oeuvre une activation de la fonction critique sur maintien de l'ordre selon laquelle le message d'activation est transmis de manière permanente au module effecteur désigné, et toute interruption de la transmission du message d'activation désactive la fonction critique au bout d'un délai déterminé.

14. Procédé selon l'une des revendications 10 à 12, **caractérisé en ce qu'**il comporte en outre une étape de transmission en retour à la station d'un message relatif à l'état du module effecteur désigné comprenant les opérations de signature par le module effecteur dudit message et d'authentification dudit message par le module d'activation de la station.

15. Procédé selon la revendication précédente, **caractérisé en ce que** le module effecteur utilise un clé privée qui lui est propre pour signer le message en retour, et le module d'activation utilise une clé publique qui lui est propre pour authentifier le message en retour.

## Claims

1. System for lifting a security lock protecting the unauthorised activation of a critical function (A_1B, A_2B, A_1C) by a robotised aerial or terrestrial drone (200, 300) suitable for communicating with a ground-based station (100) via a radio link (32), the system being **characterised in that** the station (100) comprises an activation module (130), and the drone comprises at least one effector module (230, 240, 330),
the activation module (130) comprising means (132) for generating a critical function activation message (Ma) specifically signed for a designated effector module;
and each effector module (230, 240, 330) comprising means (231) for authenticating signed activation messages from the station via the radio link (32), said authentication means being suitable for checking whether an incoming message is an authentic message actually signed for said effector module, and for authorising, if applicable, the activation of the critical function.

2. System according to the above claim, **characterised in that** a signature key and authentication key system is used by the activation module and each effector module for respectively signing and authenticating an activation message, a different signature key / authentication key pair being associated with each activation module/effector module pair.

3. System according to the above claim, **characterised in that** the signature key/authentication key pair is defined for time-restricted use, or for a use restricted to a certain number of uses.

4. System according to any of the above two claims, **characterised in that** the key system is an asymmetric key system wherein the activation module uses a private signature key selected according to the designated effector module, and each effector module uses a public authentication key.

5. System according to the above claim, **characterised in that** each effector module uses a specific public authentication key.

6. System according to any of the above four claims, **characterised in that** the activation module (130) comprises a memory (131) storing each of the signature keys intended to be used by the generation means (132) for signing a critical function activation message for a designated effector module.

7. System according to any of the above five claims, **characterised in that** each effector module (230) comprises a memory (232) storing the authentication key intended to be used by the authentication means (231) to check whether an incoming message is an integral message.

8. Ground-based station (100) for lifting a security lock protecting the unauthorised activation of a critical function (A_1B, A_2B, A_1C) by a robotised aerial or terrestrial drone (200, 300) belonging to a fleet of robotised drones,
the ground-based station comprising a transmission module (120) suitable for providing a radio link with each of the drones in the fleet,
the ground-based station being **characterised in that** it comprises an activation module (130) comprising means (132) for generating a critical function activation message (Ma) signed for a designated drone such that only the designated drone can authorise the activation of the critical function, and **in that** the transmission module is configured to carry out the transmission of said activation message (Ma) to said designated effector module.

9. Robotised drone (200, 300) intended to belong to a fleet of robotised drones,
comprising a transmission module (220) suitable for providing a radio link with a ground-based station (100) and at least an effector module (230, 240, 330) suitable for carrying out a critical function on instruction by the ground-based station, the unauthorised activation of the critical function being protected by a security lock,
**characterised in that** it comprises means (231) for authenticating incoming messages from the ground-based station configured to check whether an incoming message is an authentic message signed for a designated effector module of the drone, and to lift, if applicable, the security lock protecting the activation of the critical function by said designated effector module.

10. Method for lifting a security lock protecting the unauthorised activation of a critical function (A_1B, A_2B, A_1C) by a robotised aerial or terrestrial drone (200, 300) suitable for communicating with a ground-based station (100) via a radio link (32), the ground-based station (100) comprising an activation module (130) and the drone (200, 300) comprising at least one effector module (230, 240, 330), **characterised in that** it comprises the following steps:
- generation by the activation module (130) of the ground-based station of a critical function activation message (Ma) specifically signed for a designated effector module;
- transmission of the message via the radio link (32) from the activation module (130) to the designated effector module;
- authentication by the designated effector module of the signed activation message, to check whether the incoming message is an authentic message actually signed for said module, and
- authorisation, if applicable, by the designated effector module of the activation of the critical function.

11. Method according to the above claim, **characterised in that** it implements a signature key and authentication key system for respectively signing and authenticating an activation message, a different signature key / authentication key pair being associated with each activation module/effector module pair.

12. Method according to the above claim, **characterised in that** the key system is an asymmetric key system, the activation module using a private signature key selected according to the designated effector module, and each effector module using a public authentication key.

13. Method according to any of claims 10 to 12, **characterised in that** it implements critical function activation on maintaining the instruction whereby the activation message is continuously transmitted to the designated effector module, and any disruption of the transmission of the activation message deactivates the critical function after a predetermined interval.

14. Method according to any of claims 10 to 12, **characterised in that** it further comprises a return transmission step to the station of a message relating to the status of the designated effector module comprising the operations for signing said message by the effector module and authenticating said message by the station activation module.

15. Method according to the above claim, **characterised in that** the effector module uses a specific private key for signing the return message, and the activation module uses a specific public key for authenticating the return message.

## Patentansprüche

1. System zum Lösen eines Sperrriegels, der vor der nicht autorisierten Aktivierung einer kritischen Funktion (A_1B, A_2B, A_1C) durch eine robotergesteuerte Drohne (200, 300) vom Typ Luft- oder Bodendrohne schützt, die dazu geeignet ist, über eine Funkverbindung (32) mit einer Bodenstation (100) zu kommunizieren,
wobei das System **dadurch gekennzeichnet ist, dass** die Station (100) ein Aktivierungsmodul (130) aufweist und die Drohne zumindest ein Effektormodul (230, 240, 330) aufweist,
wobei das Aktivierungsmodul (130) Mittel zum Erzeugen (132) einer Nachricht zur Aktivierung (Ma) der kritischen Funktion umfasst, die spezifisch für ein bestimmtes Effektormodul signiert ist,
und wobei jedes Effektormodul (230, 240, 330) Mittel zum Authentifizieren (231) von signierten Aktivierungsnachrichten umfasst, die von der Station über die Funkverbindung (32) kommen, wobei die Authentifizierungsmittel dazu geeignet sind, zu prüfen, ob eine empfangene Nachricht eine integere Nachricht ist, die effektiv für das Effektormodul signiert ist, und gegebenenfalls die Aktivierung der kritischen Funktion zu autorisieren.

2. System nach dem vorhergehenden Anspruch, **dadurch gekennzeichnet, dass** ein Signierschlüssel- und Authentifizierungsschlüssel-System durch das Aktivierungsmodul und jedes Effektormodul verwendet wird, um die Signierung bzw. die Authentifizierung einer Aktivierungsnachricht sicherzustellen, wobei ein Signierschlüssel-/Authentifizierungsschlüssel-Paar jedem Aktivierungsmodul-/Effektormodul-Paar zugeordnet ist.

3. System nach dem vorhergehenden Anspruch, **dadurch gekennzeichnet, dass** das Signierschlüssel-/Authentifizierungsschlüssel-Paar für eine zeitlich begrenzte Benutzung oder für eine auf eine bestimmte Anzahl von Verwendungen begrenzte Benutzung festgelegt ist.

4. System nach einem der zwei vorhergehenden Ansprüche, **dadurch gekennzeichnet, dass** das Schlüssel-System ein System mit asymmetrischen Schlüsseln ist, wobei das Aktivierungsmodul einen privaten Signierschlüssel verwendet, der in Abhängigkeit des bestimmten Effektormoduls gewählt ist, und jedes Effektormodul einen öffentlichen Authentifizierungsschlüssel verwendet.

5. System nach dem vorhergehenden Anspruch, **dadurch gekennzeichnet, dass** jedes Effektormodul einen ihm eigenen öffentlichen Authentifizierungsschlüssel verwendet.

6. System nach einem der vier vorhergehenden Ansprüche, **dadurch gekennzeichnet, dass** das Aktivierungsmodul (130) einen Speicher (131) aufweist, der jeden der Signierschlüssel speichert, die für die Verwendung durch die Erzeugungsmittel (132) bestimmt sind, um eine Nachricht für die Aktivierung der kritischen Funktion für ein bestimmtes Effektormodul zu signieren.

7. System nach einem der fünf vorhergehenden Ansprüche, **dadurch gekennzeichnet, dass** jedes Effektormodul (230) einen Speicher (232) aufweist, der den Authentifizierungsschlüssel speichert, der für die Verwendung durch die Authentifizierungsmittel (231) bestimmt ist, um zu prüfen, ob eine empfangene Nachricht eine integere Nachricht ist.

8. Bodenstation (100) zum Lösen eines Sperrriegels, der vor der nicht autorisierten Aktivierung einer kritischen Funktion (A_1B, A_2B, A_1C) durch eine robotergesteuerte Drohne (200, 300) vom Typ Luft- oder Bodendrohne, die einer Flotte robotergesteuerter Drohnen zugehörig ist, schützt,
wobei die Bodenstation ein Übertragungsmodul (120) umfasst, das dazu geeignet ist, eine Funkverbindung mit jeder Drohne der Flotte sicherzustellen,
wobei die Bodenstation **dadurch gekennzeichnet ist, dass** sie ein Aktivierungsmodul (130) aufweist, das Mittel zum Erzeugen (132) einer Nachricht zur Aktivierung (Ma) einer kritischen Funktion umfasst, die für eine bestimmte Drohne signiert ist, derart, dass nur die bestimmte Drohne die Aktivierung der kritischen Funktion autorisieren kann, und dass das Übertragungsmodul konfiguriert ist, um die Übertragung der Aktivierungsnachricht (Ma) an das bestimmte Effektormodul sicherzustellen.

9. Robotergesteuerte Drohne (200, 300), dafür vorgesehen, einer Flotte robotergesteuerter Drohnen zugehörig zu sein,
umfassend ein Übertragungsmodul (220), das dazu geeignet ist, eine Funkverbindung mit einer Bodenstation (100) sicherzustellen, und zumindest ein Effektormodul (230, 240, 330), das dazu geeignet ist, auf Befehl der Bodenstation eine kritische Funktion auszuführen, wobei die nicht autorisierte Aktivierung der kritischen Funktion durch einen Sperrriegel geschützt ist,
**dadurch gekennzeichnet, dass** sie Mittel zur Authentifizierung (231) von Nachrichten, die von der Bodenstation empfangen werden, aufweist, die konfiguriert sind, um zu prüfen, ob eine empfangene Nachricht eine integere Nachricht ist, die für ein bestimmtes Effektormodul der Drohne signiert ist, und um gegebenenfalls den Sperrriegel zu lösen, der vor der Aktivierung der kritischen Funktion durch das bestimmte Effektormodul schützt.

10. Verfahren zum Lösen eines Sperrriegels, der vor der nicht autorisierten Aktivierung einer kritischen Funktion (A_1B, A_2B, A_1C) durch eine robotergesteuerte Drohne (200, 300) vom Typ Luft- oder Bodendrohne schützt, die dazu geeignet ist, über eine Funkverbindung (32) mit einer Bodenstation (100) zu kommunizieren, wobei die Bodenstation (100) ein Aktivierungsmodul (130) aufweist und die Drohne (200, 300) zumindest ein Effektormodul (230, 240, 330) aufweist, **dadurch gekennzeichnet, dass** es die folgenden Schritte aufweist:
- Erzeugung durch das Aktivierungsmodul (130) der Bodenstation einer Nachricht zur Aktivierung (Ma) der kritischen Funktion, die spezifisch für ein bestimmtes Effektormodul signiert ist;
- Übertragung der Nachricht über die Funkverbindung (32) von dem Aktivierungsmodul (130) zu dem bestimmten Effektormodul;
- Authentifizierung durch das bestimmte Effektormodul der signierten Aktivierungsnachricht, um zu prüfen, ob die empfangene Nachricht eine integere Nachricht ist, die effektiv für das Effektormodul signiert ist; und
- ggf. Autorisierung durch das bestimmte Effektormodul der Aktivierung der kritischen Funktion.

11. Verfahren nach dem vorhergehenden Anspruch, **dadurch gekennzeichnet, dass** es ein Signierschlüssel- und Authentifizierungsschlüssel-System verwendet, um die Signierung bzw. die Authentifizierung einer Aktivierungsnachricht sicherzustellen, mit einem Signierschlüssel-/Authentifizierungsschlüssel-Paar, das für jedes Aktivierungsmodul-/Effektormodul-Paar unterschiedlich ist.

12. Verfahren nach dem vorhergehenden Anspruch, **dadurch gekennzeichnet, dass** das Schlüssel-System ein System mit asymmetrischen Schlüsseln ist, wobei das Aktivierungsmodul einen privaten Signierschlüssel verwendet, der in Abhängigkeit des bestimmten Effektormoduls gewählt ist, und jedes Effektormodul einen öffentlichen Authentifizierungsschlüssel verwendet.

13. Verfahren nach einem der Ansprüche 10 bis 12, **dadurch gekennzeichnet, dass** es eine Aktivierung der kritischen Funktion unter Aufrechterhaltung des Befehls verwendet, wonach die Aktivierungsnachricht permanent an das bestimmte Effektormodul übertragen wird, und jede Unterbrechung der Übertragung der Aktivierungsnachricht die kritische Funktion am Ende eines bestimmten Zeitraums deaktiviert.

14. Verfahren nach einem der Ansprüche 10 bis 12, **dadurch gekennzeichnet, dass** es ferner einen Schritt der Rückübertragung einer Nachricht über den Zustand des bestimmten Effektormoduls an die Station aufweist, umfassend die Vorgänge der Signierung der Nachricht durch das Effektormodul und der Authentifizierung der Nachricht durch das Aktivierungsmodul der Station.

15. Verfahren nach dem vorhergehenden Anspruch, **dadurch gekennzeichnet, dass** das Effektormodul einen ihm eigenen privaten Schlüssel verwendet, um die Rücknachricht zu signieren, und das Aktivierungsmodul einen ihm eigenen öffentlichen Schlüssel verwendet, um die Rücknachricht zu authentifizieren.
